# FASCICULE DE BREVET EUROPEEN

(11) **EP 0 427 581 B1**
(45) Date de publication et mention de la délivrance du brevet: **19.01.1994**
(21) Numéro de dépôt: 90402852.9
(22) Date de dépôt: 12.10.1990
(51) Int. Cl.: B62D 7/18, B60B 35/02

(54) **Fusée de roue directrice de véhicule automobile**
Königzapfen für gelenktes Rad eines Kraftfahrzeuges
King pin for steered wheel of an automotive vehicle

(30) Priorité: 10.11.1989 FR 8914768
(43) Date de publication de la demande: 15.05.1991
(73) Titulaire: RENAULT VEHICULES INDUSTRIELS, 69003 Lyon (FR)
(72) Inventeur: Seiler, Christian, F-69100 Villeurbanne (FR)
(74) Mandataire: Ernst-Schonberg, Michel

(56) Documents cités:
- WO-A-81/02999
- BE-A- 571 476
- FR-A- 609 891
- GB-A- 2 044 698
- US-A- 2 637 568

## Description

L'invention concerne une fusée de roue directrice de véhicule automobile constituée par un corps en acier que prolonge vers l'extérieur un arbre de fusée et que prolonge vers l'intérieur une chape traversée par un axe de pivot qui est bloqué dans un alésage ménagé sur la tête d'extrémité d'un essieu qui s'étend entre les branches de la chape.

Ce type de fusée est connu par la publication FR-A-1.367.624. Dans les réalisations de ce type l'axe est emmanché à la presse dans la tête d'essieu, tandis qu'il est monté avec un jeu de fonctionnement dans les deux branches de la chape.

La publication FR-A-2.203.342 décrit une fusée de direction dont l'arbre de fusée est rapporté dans un alésage du corps de fusée avec une branche de la chape.

Les fusées de type connu nécessitent le démontage préalable de l'axe de pivot pour accéder aux composants mécaniques tels que bagues, douilles et butée qui assurent la qualité de pivotement de la fusée et satisfont à la charge de l'essieu.

Il en résulte une opération longue qui nécessite un outillage approprié et une forte dépense d'énergie.

L'invention a pour objet une fusée de roue directrice de conception simplifiée qui permet une révision complète de la fusée tout en évitant le démontage de l'axe de pivot.

L'invention a encore pour objet une fusée que prolongent vers l'intérieur les branches supérieure et inférieure d'une chape traversées par l'axe de pivot dans le but de favoriser le démontage de la fusée.

Selon l'invention la branche supérieure de la chape est constituée par une tête alésée conformée en une bride de fixation en appui sur le corps de la fusée, et ladite bride comporte des trous de passage d'organes de fixation pour assurer une liaison rigide démontable de ladite branche de la chape du corps de la fusée.

La fusée ainsi réalisée est aisément dissociable de l'essieu et peut être révisée et contrôlée avec un outillage sans nécessiter de compétences particulières.

D'autres caractéristiques et avantages de l'invention apparaîtront à la lecture de la description d'un exemple de réalisation de la fusée faite en référence au dessin amené dans lequel :
- La figure 1 est une vue en coupe axiale d'une roue directrice de véhicule automobile dont le moyeu est monté sur l'arbre de la fusée conforme à l'invention.
- La figure 2 est une vue en élévation de la partie supérieure de la fusée.
- La figure 3 est une vue en plan de la partie de la fusée représentée à la figure 2.

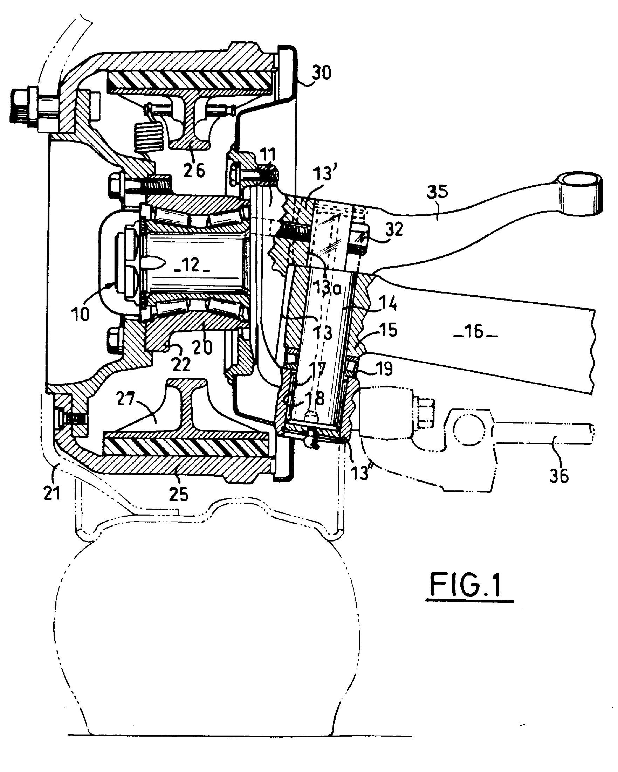

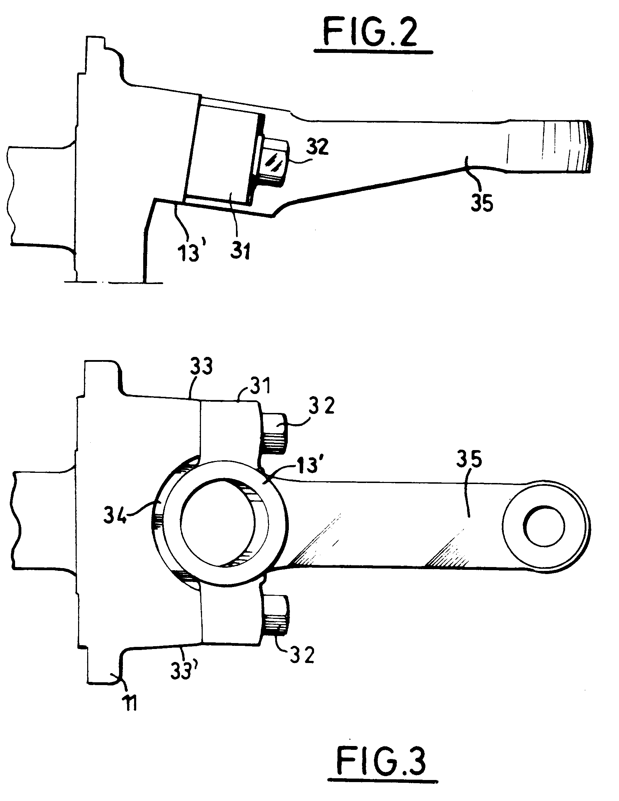

Dans la forme d'exécution des figures 1 et 3 l'invention s'applique au montage d'une roue directrice de véhicule dans laquelle la fusée 10 est constituée par un corps 11 que prolonge vers l'extérieur un arbre 12 de fusée et que prolongent vers l'intérieur les branches supérieure 13' et inférieure 13'' d'une chape 13 traversées par un axe de pivot 14 graissé.

Selon une disposition connue l'axe 14 est emmanché à force dans l'alésage d'une tête 15 d'essieu 16 qui s'étend entre les branches 13', 13'' de la chape.

L'extrémité supérieure de l'axe 14 est montée avec jeu dans une bague antifriction 13a montée dans l'alésage de la branche 13'. L'extrémité inférieure de l'axe 14 qui communique avec l'extrémité supérieure par un canal de graissage alimenté par un graisseur unique est montée avec jeu au contact d'aiguilles 17 de roulement montées dans l'alésage 18 de la branche 13''. La face intérieure de la branche 13'' porte une butée axiale 19 sur laquelle prend appui la tête 15 d'essieu 16.

L'arbre 12 de fusée porte le roulement 20 de la roue 21 fixée à une bride 22 rapportée sur la bague extérieure de roulement 20. La bride 22 supporte conjointement la jante de la roue 21 et le tambour 25 d'un frein dont on a représenté les mâchoires 26 et 27.

Les corps 11 de la fusée porte par ailleurs un déflecteur 30 protecteur du frein 26.

En se rapportant plus particulièrement aux figures 2 et 3 on voit que la branche supérieure 13' de la chape 13 est constituée par une tête alésée conformée en une bride de fixation 31 maintenue à l'aide de 2 vis 32 en appui sur deux bossages 33, 33' du corps 11 situés de part et d'autre d'un logement 34 de réception de la branche 13'.

La commande d'orientation de la fusée autour de l'axe de pivot 14 est assurée par un levier de direction 35 qui prolonge la branche supérieure 13'. La branche inférieure 13'' est reliée à un levier et à une bielle de connexion 36 qui assurent la liaison transversale des fusées de l'essieu directeur.

Comme cela apparaît à l'examen des figures on voit que le démontage des vis 32 permet de désolidariser la fusée de l'axe de pivot 14 sous réserve de soulever localement la partie suspendue du véhicule notamment au niveau de la tête d'essieu 15.

La suspension de la roue occupe dans ce cas une position détendue qui favorise la descente de la roue et la libération de la branche inférieure 13'' de l'axe de pivot. Cette manière de procéder favorise l'accès à la bague 13a, aux aiguilles 17 et à la butée 19.

## Revendications

1. Fusée de roue directrice de véhicule automobile constituée par un corps (11) que prolonge vers l'extérieur un arbre de fusée (12) et que prolongent vers l'intérieur les branches supérieure et inférieure d'une chape traversées par un axe (14) de pivot qui est bloqué dans un alésage ménagé sur la tête (15) d'extrémité d'un essieu qui s'étend entre les branches de la chape, caractérisée par le fait que la branche supérieure (13') de la chape (13) est constituée par une tête alésée conformée en une bride de fixation (31) en appui sur le corps (11) de la fusée et que ladite bride (31) coopère avec des organes de fixation (32) pour assurer une liaison rigide démontable de ladite branche de la chape du corps de la fusée.

2. Fusée de roue selon la revendication 1, caractérisée par le fait que le corps (11) de la fusée comporte deux bossages (33, 33') d'appui situés de part et d'autre d'un logement (34) de réception de la branche (13') supérieure de la chape.

3. Fusée de roue selon la revendication 2, caractérisée par le fait que la branche supérieure de la chape est prolongée par un levier de commande (35) de l'orientation de la fusée autour de l'axe de pivot.

## Patentansprüche

1. Achsschenkel für ein gelenktes Kraftfahrzeugrad, bestehend aus einem Körper 11, der durch eine Achsschenkelwelle 12 nach außen verlängert ist und der nach innen durch die oberen und unteren Schenkel eines Gabelgelenks verlängert ist, das von einem Achsschenkelbolzen 14 durchsetzt wird, der in einer Bohrung festgestellt ist, welche im Endstück 15 einer Achse vorgesehen ist, die sich zwischen den Schenkeln des Gabelgelenks erstreckt, **dadurch gekennzeichnet,** daß der obere Schenkel 13' des Gabelgelenks 13 aus einem durchbohrten Kopfteil in Form eines Spannbügels 31 besteht, der sich auf dem Körper 11 des Achsschenkels abstützt, und daß der Bügel 31 mit einer Befestigungsanordnung 32 zusammenwirkt, um eine steife, lösbare Verbindung des Schenkels des Gabelgelenks mit dem Achsschenkelkörper zu gewährleisten.

2. Achsschenkel nach Anspruch 1, **dadurch gekennzeichnet,** daß der Achsschenkelkörper 11 zwei Stützvorsprünge 33, 33' aufweist, die beidseits einer Aufnahmeöffnung 34 für den oberen Schenkel 13' des Gabelgelenks vorgesehen sind.

3. Achsschenkel nach Anspruch 2, **dadurch gekennzeichnet,** daß der obere Schenkel des Gabelgelenks durch einen Steuerhebel 35 für die Lenkung des Achsschenkels um den Achsschenkelbolzen herum verlängert ist.

## Claims

1. A king pin for a steered wheel of an automobile vehicle formed by a body (11) which prolongs outwardly a king pin shaft (12) and which prolongs inwardly the upper and lower arms of a fork joint traversed by a pivoting axis (14) which is locked in a bore provided on the end head (15) of an axle which extends between the arms of the fork joint, characterized in that the upper arm (13') of the fork joint (13) is formed by a bored head shaped as a fastening flange (31) bearing on the body (11) of the king pin and in that this flange (31) cooperates with fastening members (32) to provide a rigid detachable connection of the arm of the fork joint to the king pin body.

2. A wheel king pin as claimed in claim 1, characterized in that the body (11) of the king pin comprises two bearing bosses (33, 33') disposed on each side of a housing (34) for receiving the upper arm (13') of the fork joint.

3. A wheel king pin as claimed in claim 2, characterized in that the upper arm of the fork joint is prolonged by a lever (35) controlling the orientation of the king pin about the pivoting axis.
